# EUROPÄISCHE PATENTSCHRIFT

(11) **EP 0 571 890 B1**
(45) Veröffentlichungstag und Bekanntmachung des Hinweises auf die Patenterteilung: **12.04.1995**
(21) Anmeldenummer: 93108174.9
(22) Anmeldetag: 19.05.1993
(51) Int. Cl.: B60J 7/04

(54) **Deckelelement zum Verschliessen einer Dachöffnung**
Cover for closing a roof opening
Couvercle pour fermer une ouverture de toit

(30) Priorität: 23.05.1992 DE 4217151
(43) Veröffentlichungstag der Anmeldung: 01.12.1993
(73) Patentinhaber: WEBASTO KAROSSERIESYSTEME GmbH, D-82131 Stockdorf (DE)
(72) Erfinder: Reihl, Peter, W-8130 Starnberg (DE); Reinsch, Burkhard, W-8027 Neuried (DE)

(56) Entgegenhaltungen:
- DE-A- 3 149 977
- DE-A- 3 202 646
- DE-A- 3 806 377
- DE-A- 3 812 955
- DE-C- 3 924 035
- DE-U- 1 811 690

## Beschreibung

Die Erfindung bezieht sich auf ein plattenförmiges Deckelelement zum wahlweisen Verschließen oder mindestens teilweisen Freilegen einer Dachöffnung in einem Kraftfahrzeugdach.

Schiebe- und Hebedächer sind in Kraftfahrzeugen hohen thermischen Beanspruchungen und wechselhaften klimatischen Einflüssen ausgesetzt. Um eine Dichtigkeit des Schiebe- oder Hebedachs auch über einen extrem großen Temperaturbereich von etwa - 30 °C bis 100 °C zu gewährleisten und unter diesen Bedingungen die Dichtigkeit gegen eindringendes Regenwasser oder Schnee beibehalten zu können, werden sehr hohe Anforderungen an die Steifigkeit und Temperaturwechselbeständigkeit der Deckelelemente des Daches gestellt. Gefordert werden weiterhin geringe Fertigungstoleranzen und eine geringe Wärmedehnung der Deckelelemente, um den Dichtungsaufwand zwischen Dachöffnung und Deckelelement in vertretbaren Maßen halten zu können.

Bekannt sind Schiebe- und Hebedachdeckel aus gestanzten oder gefalzten Blechformteilen, aus Glas, Sandwichelementen und Kunststoff (DE-A-3 202 646 und DE-U-1 811 690).

Die Herstellung von Dachdeckelelementen aus Blech und Glas ist nur in einer aufwendigen Fertigungsanlage realisierbar.

Bei der Verwendung von Kunststoff treten Schwierigkeiten hinsichtlich der Steifigkeit und Lackierbarkeit der Deckelelemente auf. Kunststoffe haben darüberhinaus einen relativ hohen Wärmeausdehnungskoeffizienten, was wiederum zu einem erhöhten Dichtungsaufwand in dem Bereich zwischen Schiebe- oder Hebedachdeckel und Dachöffnung führt.

Sandwichelemente weisen zwar die für einen Schiebe- oder Hebedachdeckel geforderte Steifigkeit auf, sind jedoch bislang nur sehr aufwendig herzustellen.

Bei allen obengenannten Materialien treten relativ hohe Fertigungstoleranzen in der Fertigung auf, die durch einen entsprechend hohen Dichtungsaufwand kompensiert werden müssen.

Der im Anspruch 1 angegebenen Erfindung liegt die Aufgabe zugrunde, ein Deckelelement der oben genannten Art zu schaffen, das eine hohe Steifigkeit bei niedriger Bauhöhe und niedrigem Gewicht aufweist und das mit geringem Fertigungsaufwand in engen Fertigungstoleranzen realisierbar ist.

Diese Aufgabe wird bei einem Deckelelement der gattungsgemäßen Art dadurch gelöst, daß das Deckelelement im wesentlichen aus einem Strangpreßprofilteil aus einem Leichtmetall oder einer Leichtmetallegierung besteht.

Leichtmetall-Strangpreßprofile sind kostengünstig als Meterware anlieferbar und brauchen nicht nachbearbeitet zu werden. Strangpreßprofilteile gestatten auf einfachste Weise eine Anpassung an verschiedene Fahrzeugmodelle, da für unterschiedliche Breiten bzw. Längen der Dachöffnung lediglich die Abschnittlänge des Strangpreßprofilteils zu ändern ist. Als Material für das Strangpreßverfahren eignen sich im besonderen Maße Al- und Mg-Legierungen.

Weitere Ausgestaltungen der Erfindung ergeben sich aus den Unteransprüchen.

Die Schnittkanten des Strangpreßprofilteils sind vorzugsweise mit Abdicht- und/oder Führungselementen versehen, die die Führung des Deckelelements in der Dachöffnung ermöglichen. Die Abdicht- und/oder Führungselemente decken als Endstücke die Schnittseiten des Strangpreßprofilteils ab. Die Abdicht- und/oder Führungselemente weisen hierfür vorzugsweise ein zum Strangpreßprofil zumindest teilweise komplementäres Profil auf, wodurch diese einfach auf das Strangpreßprofilteil aufsteck- oder aufsetzbar sind. Die Abdicht- und/oder Führungselemente lassen sich anschließend durch eine formschlüssige oder kraftschlüssige Verbindung an dem Strangpreßprofilteil festlegen.

Da die Abdicht- und/oder Führungselemente die Eckbereiche der Deckelelemente aufweisen, können Änderungen in der Form der Dachöffnung unter gestalterischen Aspekten leichter realisiert werden, insbesondere dann, wenn in weiterer Ausgestaltung der Erfindung das Abdicht- und/oder Führungselement als Spritz- oder Druckgußformteil ausgebildet ist, das sich ohne großen Fertigungsaufwand in veränderten Formen, z.B. mit größeren Krümmungsradien in den Eckbereichen, herstellen läßt.

An dem Strangpreßprofilteil kann eine Regenrinne einstückig angeformt sein.

Die Strangpreßprofile sind vorzugsweise quer zur Fahrtrichtung gerichtet, obwohl grundsätzlich auch eine Ausrichtung der Profile längs zur Fahrtrichtung in Frage kommt.

Das Strangpreßprofilteil läßt sich für einen einteiligen Schiebedachdeckel verwenden. Es läßt sich jedoch vorzugsweise auch für lamellenförmige Deckelelemente eines Lamellenschiebedachs verwenden, wie es z.B. in der nicht vorveröffentlichten, zum Stand der Technik gemäß Art. 54 EPÜ nicht gehörenden DE-A-4 123 229 beschrieben ist. Die lamellenförmigen Deckelelemente stoßen in Schließstellung des Schiebedaches an ihren Längskanten aneinander und werden in Öffnungsstellung an einer Seite der Schiebedachöffnung durch die Überlagerung einer translatorischen Bewegung mit einer Schwenkbewegung in eine verschwenkte Lage gebracht, in der sich die lamellenförmigen Deckelelemente zumindest teilweise überdecken.

Das Strangpreßprofilteil für die lamellenförmigen Deckelelemente weist vorzugsweise an seiner ersten Längs- oder Stoßkante einen Hinterschnitt zur Aufnahme einer Dichtung auf, während an der dazu abgewandten zweiten Stoßkante eine Anlagefläche zur dichten Anlage an die Dichtung eines benachbarten Deckelelementes ausgebildet ist. Hierdurch wird zum einen eine definierte Aufnahme für die Dichtung zwischen den lamellenförmigen Deckelementen geschaffen und zum anderen wird sichergestellt, daß das Lamellenschiebedach in Schließstellung absolut dicht schließt.

Die lamellenförmigen Deckelelemente werden an ihren Dicht- und/oder Führungselementen in der Schiebedachöffnung befestigt. Die Führung der Deckelelemente während der Translationsbewegung und Schwenkbewegung von der Schließstellung in die Öffnungsstellung des Schiebedachs und vice versa wird hierbei in bekannter Weise, z.B. durch eine Kulissenführung, bewerkstelligt, wie sie z.B. in der obengenannten DE-A-4 123 229 dargestellt ist.

Die Deckelelemente können sowohl an ihrer dem Fahrzeuginnern zugewandten Innenseite als auch an ihrer Außenseite Nuten zur Befestigung einer Folien- oder Gewebelage aufweisen. Das Aufbringen einer alle lamellenförmigen Deckelelement überspannenden Folien- oder Gewebelage verhindert das Eindringen von Regenwasser zwischen die lamellenförmigen Deckelelemente. Hierbei ist darauf zu achten, daß die Nuten in den Deckelelementen von deren Stoßkanten entfernt sind, damit sich die Folien- oder Gewebelage in Öffnungsstellung des Schiebedaches von den verschwenkten Deckelelementen abheben und falten kann.

In gleicher Weise kann auf der Innenseite der Deckelelemente ein Dachhimmel aufgespannt sein. Dieser kann in Form von einzelnen Himmelelementen separat an jedem einzelnen lamellenförmigen Deckelelement befestigt sein oder wie die auf der Außenseite befindliche Gewebe- oder Folienlage die gesamte Fläche des Schiebedachs überspannen.

Die Abdicht- oder Führungselemente können eine seitliche Sichtblende aufweisen. Diese kann einstückig an die Abdicht- oder Führungselemente oder nachträglich angeformt sein.

Ausführungsbeispiele der Erfindung sind nachfolgend anhand der Zeichnungen näher erläutert. Eszeigt:
- Fig. 1: eine perspektivische teilgeschnittene Ansicht eines vorderen Eckbereichs eines Schiebe- oder Hebedachdeckels,
- Fig. 2: eine Ansicht ähnlich Fig. 1 eines Schiebe- oder Hebedachdeckels mit einer durch ein Zusatzteil befestigten Umlaufdichtung,
- Fig. 3: eine Ansicht ähnlich Fig. 1 eines Schiebe- oder Hebedachdeckels mit einem die Schnittkante eines Strangpreßprofils abdeckenden Endstück,
- Fig. 4: den Schnitt entlang der Linie IV-IV der Fig. 3,
- Fig. 5: den Schnitt entlang der Linie V-V der Fig. 3,
- Fig. 6: eine Ansicht ähnlich Fig. 1 mit einem Endstück zur Abdeckung der Schnittkante des Strangpreßprofils und einer an dem Endstück angeformten Sichtblende,
- Fig. 7: eine perspektivische Ansicht eines lamellenförmigen Schiebedachdeckels mit Endstück für ein Lamellenschiebedach,
- Fig. 8: einen Schnitt durch ein Lamellenschiebedach mit einer äußeren Schiebedachverkleidung in Schließstellung des Schiebedachdeckels,
- Fig. 9: eine Ansicht gemäß Fig. 8 in Öffnungsstellung des Schiebedachdeckels,
- Fig. 10: einen Schnitt durch zwei Deckelelemente eines Lamellenschiebedachs mit angeformtem Dachhimmel in Schließstellung des Schiebedachdeckels,
- Fig. 11: eine Ansicht gemäß Fig. 10 in Öffnungsstellung des Schiebedachdeckels,
- Fig. 12: einen Schnitt durch zwei Deckelelemente eines abgewandelten Lamellenschiebedachs in Dachschließstellung und
- Fig. 13: eine Ansicht gemäß Fig. 12 in Dachöffnungsstellung.

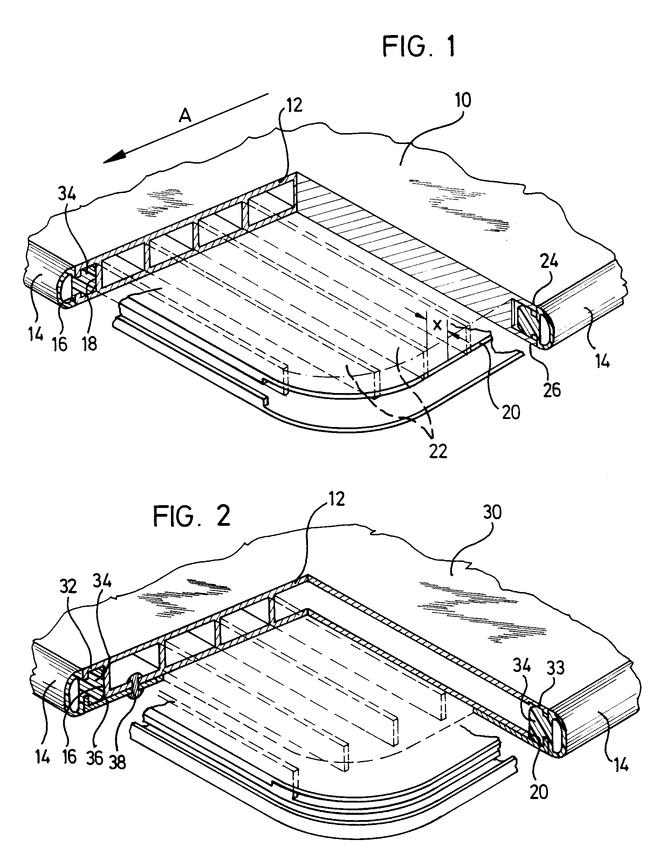

Fig. 1 zeigt in perspektivischer Aufsicht die vordere Ecke eines Schiebe- oder Hebedachdeckels 10, der aus einem Strangpreßprofil 12 und einer im Kantenbereich umlaufenden Gummi- oder Kunststoffdichtung 14 besteht.

Das Strangpreßprofil 12 ist quer zur Fahrtrichtung A eingebaut. An seiner Längskante 16 ist ein Befestigungsteil 34 der Umlaufdichtung 14 in einer Nut 18 des Strangpreßprofilteils 12 gehalten. Im Bereich der Schnittkante 20 des Strangpreßprofils 12 sind dessen Stege 22 auf eine bestimmte Tiefe x abgefräst, die der Tiefe der Nut 18 an den beiden Längskanten 16 entspricht. Hierdurch wird die Umlaufdichtung 14 auch im Bereich der Schnittkante 20 des Strangpreßprofils 12 gehalten, ohne daß ein separates Endstück in Form eines Abdicht- oder Führungselementes vorgesehen werden muß.

Neben dem Heraustrennen der Stege 22 bis zur Einstecktiefe des Befestigungsteils 34 der Umlaufdichtung 16 kann auch ein Einsteckteil der Dichtung 14 ausgestanzt werden. Eine Hintergreifung des Befestigungsteils 34 der Umlaufdichtung 14 ist auch ohne nutenförmige Ausformung der Kanten des Strangpreßprofils 12 möglich. Dann müssen nur die oberen und unteren Schenkel 24, 26 an den Kanten 16, 20 des Strangpreßprofils 12 aufeinander zu verpreßt werden. Selbstverständlich kann auch lediglich der untere Schenkel 26 nach oben verbogen werden, wodurch eine in etwa trapezförmige Nut gebildet wird.

Fig. 2 zeigt eine zur Fig. 1 weitgehend ähnliche Ausführungsform eines Schiebe- oder Hebedachdeckels, wobei identische oder funktionsgleiche Teile mit identischen Bezugszeichen versehen sind.

Der Schiebe- oder Hebedachdeckel 30 besteht wiederum aus einem Strangpreßprofil 12, dessen Kanten rundum von einer Umlaufdichtung 14 abgedeckt sind. Im Gegensatz zu der in Fig. 1 dargestellten Ausführungsform weist die Längskante 16 des Strangpreßprofils 12 keine Nut, sondern nur eine einseitig überstehende L-förmige Leiste 32 auf, die die obere Wand einer Nut zur Aufnahme eines Befestigungteils 34 der Umlaufdichtung 14 bildet. Die andere Nutwand wird durch ein umlaufendes Klemmprofil 36 gebildet, das mit einer Blindniet oder Schraube 38 an dem Strangpreßprofil 12 festgelegt wird. Die Schnittkante 20 des Strangpreßprofils 12 ist derart abgefräst, daß, ähnlich zur L-förmigen Leiste 32 an der Längskante 16, eine L-förmige Leiste 33 stehenbleibt, die wie die Leiste 32 den oberen Teil einer Nut zur Aufnahme des Befestigungsteils 34 der Umlaufdichtung 14 bildet. Die Unterseite der Leiste 33 wird beim Herausfräsen des darunter befindlichen Teils der Schnittkante 20 des Strangpreßprofils 12 L-förmig gefräst.

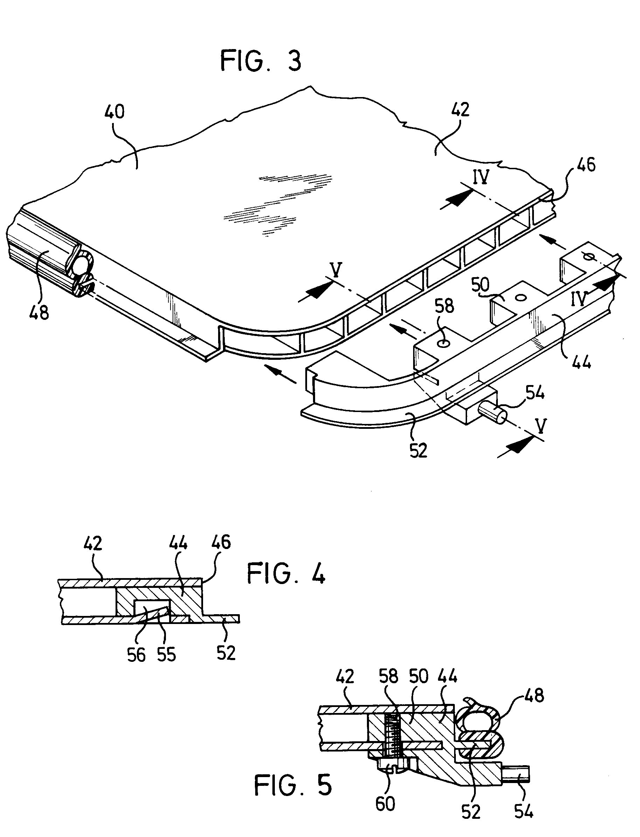

Fig. 3 zeigt eine Ansicht ähnlich den Fign. 1 und 2 eines Schiebe- oder Hebedachdeckels 40, der im wesentlichen aus einem Strangpreßprofil 42, einem Endstück 44 zum Abdecken der Schnittkante 46 des Strangpreßprofils 42 und einer umlaufenden Dichtung 48 besteht.

Das Endstück 44 hat ein zum Strangpreßprofilteil 42 zumindest teilweise komplementäres Profil 50, mit dem es an der Schnittkante 46 des Strangpreßprofils 42 eingesteckt wird. Die Befestigung des Endstückes 44 als Abdicht- und/oder Führungselement für den Schiebe- oder Hebedachdeckel 40 erfolgt entweder mittels einer Schraube wie in Fig. 5 dargestellt oder durch Verquetschen, wie es in Fig. 4 dargestellt ist. Das Endstück 44 besteht aus Aluminiumdruckguß und hat einen Dichtflansch 52 zur Aufnahme der Umlaufdichtung 48 und einen Bolzen 54 als Mechanikanbindung z.B. an in der Dachöffnung ausgebildete Führungskulissen für den Schiebe- oder Hebedachdeckel 40.

Bei der Ausführungsform gemäß Fig. 4 ist das Endstück 44 nach dem Einschieben in das Strangpreßprofilteil 42 dadurch festgelegt, daß die Unterseite 55 des Strangpreßprofilteils 42 in Richtung auf das eingeschobene Endstück 44 perforiert ist und die verformte Unterseite 55 eine Ausnehmung 56 in dem Endstück 44 hintergreift.

Fig. 5 zeigt den Schnitt V-V aus Fig. 3 mit einer zu Fig. 4 alternativen oder zusätzlichen Befestigungsmöglichkeit. Das Endstück 44 weist in einem in das Strangpreßprofil 42 eingeschobenen Profil 50 eine Durchbohrung 58 auf, in die eine die Unterseite des Strangpreßprofils 42 durchsetzende Schraube 60 eingreift. Auf diese Weise wird eine sichere Befestigung des Endstücks 44 an dem Strangpreßprofil 42 gewährleistet.

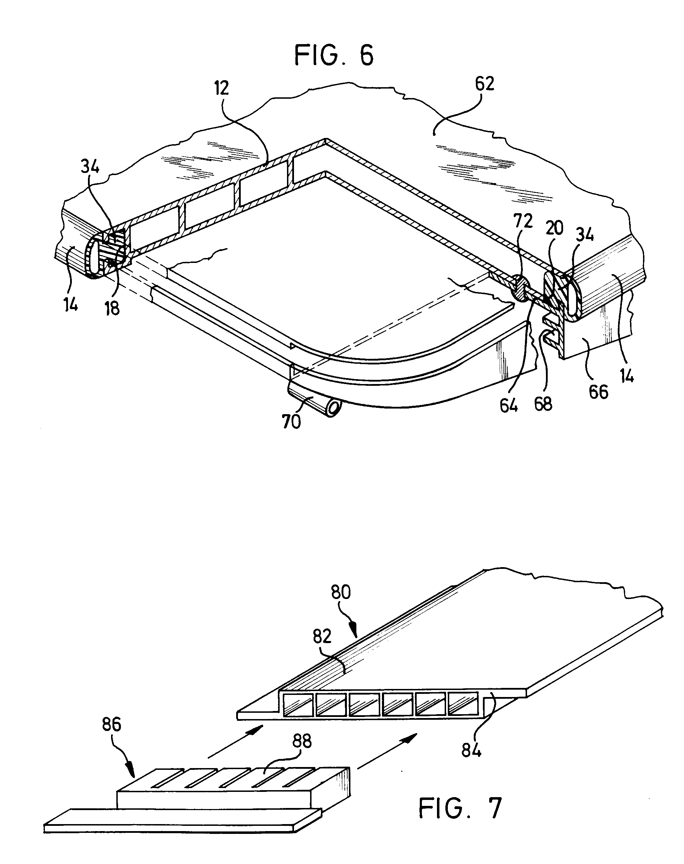

Fig. 6 zeigt einen Schiebe- oder Hebedachdeckel 62 in perspektivischer Ansicht ähnlich Fig. 1. Zu den vorhergehenden Figuren identische oder funktionsgleiche Teile sind mit identischen Bezugszeichen versehen.

Der Schiebe- oder Hebedachdeckel 62 unterscheidet sich von den Schiebe- oder Hebedachdeckeln 10 und 30 in den Fign. 1 und 2 dadurch, daß im Bereich der Schnittkante 20 an der Unterseite des Strangpreßprofils 12 ein Führungs- und Befestigungsteil 64 angesetzt ist, das eine nach unten ragende seitliche Sichtblende 66 mit einer Kulisse 68 zur Mechanikanbindung an eine Führungseinrichtung in der Dachöffnung und ein Scharnierteil 70 zur Bildung eines Gelenks aufweist, das ein Verschwenken des Deckels 62 erlaubt.

Das Führungs- und Befestigungsteil 64 ist mittels Nieten 72 oder Schrauben an dem Strangpreßprofil 12 befestigt. Das Teil 64 kann zusammen mit der Kulisse 68 und dem Scharnierteil 70 für die Befestigung und Führung des Schiebe- oder Hebedachdeckels als Druckguß- oder Spritzgußteil ausgebildet sein.

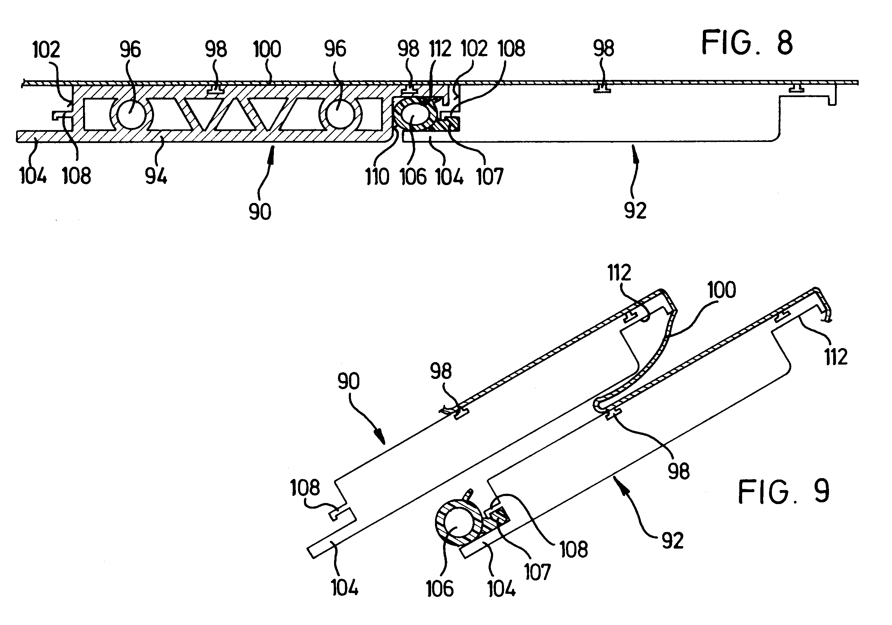

Fig. 7 zeigt ein lamellenförmiges Deckelelement 80, bestehend aus einem jalousienförmigen länglichen Strangpreßprofil 82, an dessen Schnittkante 84 Endstücke 86 als Führungs- und/oder Dichtungselemente aufgesetzt sind. Hierfür weist das Endstück 86 ein zum Strangpreßprofil 82 komplementäres Profil 88 auf, das in das Strangpreßprofil 82 eingeschoben wird. Die Verbindung des Endstücks 86 mit dem Strangpreßprofil 82 kann durch Quetschen und Verrasten ähnlich Fig. 4 oder durch Schrauben entsprechend Fig. 5 erfolgen.

Das lamellenförmige Deckelelement 80 eignet sich insbesondere für Lamellenschiebedächer vorgesehen, wie sie z.B. in der o.g. Deutschen Patentanmeldung DE-A-4 123 229 beschrieben sind.

Fig. 8 zeigt zwei Deckelelemente 90, 92 eines Lamellenschiebedachs, die jeweils ein Strangpreßprofil 94 aufweisen, wie es beim Deckelelement 90 dargestellt ist. Der Übersichtlichkeit halber ist auf die Einzeichnung des Strangpreßprofils beim Deckelemelement 92 verzichtet. Das Strangpreßprofil 94 der Deckelelemente 90 und 92 weist zwei Bohrungen 96 zur Aufnahme von Endstücken als Abdicht- und Befestigungselemente auf.

Die beiden Deckelelemente 90 und 92 sind in Schließstellung des Daches dargestellt. An ihrer vom Fahrzeuginnern abgewandten Außenseite weisen die Deckelelemente 90, 92 eingeformte Nuten 98 auf, die von Befestigungselementen einer Gewebe- oder Folienlage 100 als Verkleidung des Schiebedachs hintergriffen werden. Diese Verkleidung 100, die sich bei der in Fig. 9 dargestellten Öffnungsstellung des Schiebedachs zusammenfaltet, stellt sicher, daß keine Nässe in die Schiebedachmechanik und das Fahrzeuginnere gelangt.

Das Strangpreßprofil 94 weist im Bereich der vorne liegenden Längskanten 102, die als Stoßkanten für benachbarte lamellenförmige Deckelelement 90, 92 ausgebildet sind, einen Hinterschnitt 104 zur Aufnahme einer Wulst- oder Hohlkammerdichtung 106 auf, die in Schließstellung des Lamellenschiebedachs sowohl an dem Deckelelement 90 als auch an dem Deckelelement 92 anliegt. An der Längskante 102 der Deckelelemente 90, 92 ist weiterhin ein Schenkel 108 ausgebildet, der zusammen mit dem Hinterschnitt 104 eine Nut zur Aufnahme eines Befestigungsteils 107 der Dichtung 106 bildet. An der von der Längskante 102 abgewandten anderen Längskante 110 ist eine horizontale Anlagefläche 112 ausgebildet, die sich bei geschlossenem Dach an der dem Hinterschnitt 104 des benachbarten Deckelelements 92 gegenüberliegenden Seite an die wulstförmige Dichtung 106 anlegt. Auf diese Weise wird eine besonders gute thermische Abdichtung bei geschlossenem Lamellenschiebedach bewirkt.

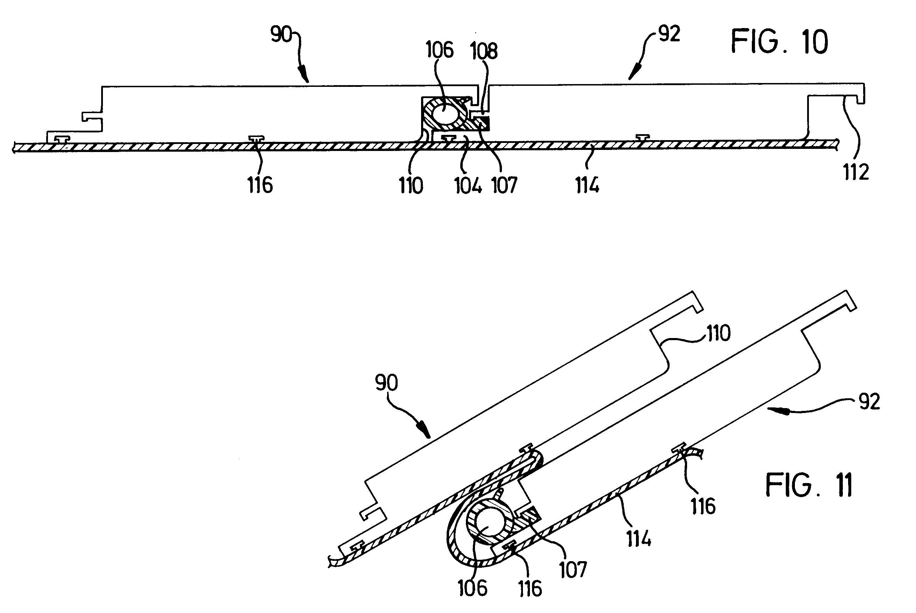

Die Fign. 10 und 11 zeigen eine den Fign. 8 und 9 weitgehend ähnliche Ausführungsform eines Lamellenschiebedachs, wobei identische oder funktionsgleiche Teile mit identischen Bezugszeichen versehen sind.

Im Gegensatz zu der in den Fign. 8 und 9 dargestellten Ausführungsform weisen die Deckelelemente gemäß den Fign. 10 und 11 keine äußere Verkleidung, sondern einen einstückigen Dachhimmel 114 auf, der in Art einer einstückigen Folienlage die gesamte Unterseite des Lamellenschiebedaches überdeckt. Der Himmel 114 ist wie die Verkleidung 100 in den Fig. 8 und 9 mit einer Nut/Feder-Verbindung 116 an den lamellenförmigen Deckelelementen 90, 92 befestigt. Auch hier ist es wichtig, daß die Nut/Feder-Verbindungen 116 zumindest von einer Stoßkante 110 beabstandet sind, damit sich der Himmel in der Offenstellung des Lamellenschiebedachs (Fig. 11) falten kann, ohne die Bewegung der lamellenförmigen Deckelelemente 90, 92 zu beeinträchtigen. Statt eines einstückigen Himmels können auch an jedem Deckelelement 90, 92 einzelne Himmelelemente befestigt sein. Der durchgehende Himmel 114 bietet ähnlich wie die Verkleidung 100 gemäß den Fign. 8 und 9 einen guten Schutz der Dachmechanik gegen Verschmutzung.

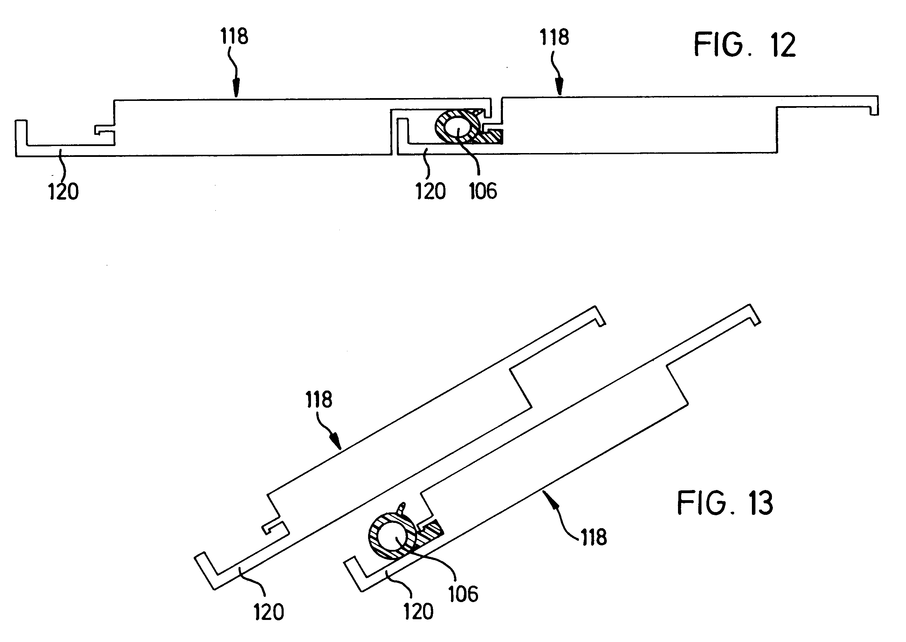

Die Ausführungsform gemäß den Fign. 12 und 13 ist weitgehend ähnlich den Ausführungsbeispielen der Fign. 8 und 9 bzw. 10 und 11. In diesem Fall ist keine Gewebe- oder Folienlage vorgesehen, und an den Deckelelementen 118 ist im Bereich der vorderen Längskante eine Wasserrinne 120 einstückig angeformt.

## Patentansprüche

1. Deckelelement (10, 30, 40, 62, 80, 90, 92, 118) zum wahlweisen Verschließen oder mindestens teilweisen Freilegen einer Dachöffnung in einem Kraftfahrzeugdach, dadurch gekennzeichnet, daß das Deckelelement (10, 30, 40, 62, 80, 90, 92, 118) im wesentlichen aus einem Strangpreßprofil (12, 42, 82, 94) aus einem Leichtmetall oder einer Leichtmetallegierung besteht.

2. Deckelelement nach Anspruch 1, dadurch gekennzeichnet, daß die Schnittkanten (46, 84) des Strangpreßprofils (42, 82) mit einem als Abdicht- und/oder Führungselement ausgebildeten Endstück (44, 64, 86) abgedeckt sind.

3. Deckelelement nach Anspruch 2, dadurch gekennzeichnet, daß das Endstück (44, 86) ein zum Strangpreßprofil (42, 82) komplementäres Profil (50, 88) aufweist.

4. Deckelelement nach Anspruch 2 oder 3, dadurch gekennzeichnet, daß das Endstück (44, 64, 86) und das Strangpreßprofil (42, 82) durch Quetschung, Verklebung, Verschraubung oder Vernietung miteinander verbunden sind.

5. Deckelelement nach einem der Ansprüche 2 bis 4, dadurch gekennzeichnet, daß das Endstück (44, 64, 86 ) als Spritz- oder Druckgußformteil ausgebildet ist.

6. Deckelelement nach einem der vorhergehenden Ansprüche, dadurch gekennzeichnet, daß das Strangpreßprofil (12, 42, 82, 94)quer zur Fahrtrichtung angeordnet ist.

7. Deckelelement nach einem der vorhergehenden Ansprüche, dadurch gekennzeichnet, daß das Deckelelement (90, 92, 118) lamellenförmig ausgebildet ist und in einer Abfolge mit weiteren lamellenförmigen Deckelelementen (92, 90, 118) ein Lamellenschiebedach bildet.

8. Deckelelement nach Anspruch 7, dadurch gekennzeichnet, daß es an einer ersten Stoßkante (102) einen Hinterschnitt (104) zur Aufnahme einer Dichtung (106) und an der dazu abgewandten zweiten Stoßkante (110) eine Anlagefläche (112) zur dichten Anlage an die Dichtung (106) eines benachbarten Deckelelements (92) aufweist.

9. Deckelelement nach Anspruche 7 oder 8, dadurch gekennzeichnet, daß an seiner dem Fahrzeuginnern zugewandten Seite Verbindungselemente (116), vorzugsweise Nuten, zur Aufnahme eines Fahrzeughimmels (114) angeordnet sind, der sich über ein Deckelelement (90, 92) oder über das gesamte Lamellendach erstreckt.

10. Deckelelement nach Anspruch 9, dadurch gekennzeichnet, daß die Verbindungselemente (116) von einer Stoßkante (110) des Deckelelements (90, 92) beabstandet sind.

11. Deckelelement nach einem der Ansprüche 7 bis 10, dadurch gekennzeichnet, daß an seiner dem Fahrzeuginnern abgewandten Außenseite mindestens eine Nut (98) zur Befestigung einer Schiebedachverkleidung (100) in Form einer Folien- oder Gewebelage vorgesehen ist.

12. Deckelelement nach Anspruch 11, dadurch gekennzeichnet, daß die Nut (98) von mindestens einer Stoßkante (102) beabstandet ist.

13. Deckelelement nach einem der vorhergehenden Ansprüche, gekennzeichnet durch eine angeformte Wasserrinne (120).

## Claims

1. A roof element (10, 30, 40, 62, 80, 90, 92, 118) for optionally closing or at least partially exposing a roof opening in a motor vehicle roof, characterised in that the roof element (10, 30, 40, 62, 80, 90, 92, 118) substantially consists of an extruded section (12, 42, 82, 94) of a light metal or a light metal alloy.

2. A roof element according to Claim 1, characterised in that the cut edges (46, 84) of the extruded section (42, 82) are covered by an end piece (44, 64, 86) which is constructed as a sealing and/or guiding element.

3. A roof element according to Claim 2, characterised in that the end piece (44, 86) has a profile (50, 88) which complements that of the extruded section (42, 82).

4. A roof element according to Claim 2 or 3, characterised in that the end piece (44, 64, 86) and the extruded section (42, 82) are connected to each other by squeezing, gluing, screwing or riveting.

5. A roof element according to one of Claims 2 to 4, characterised in that the end piece (44, 64, 86) is constructed as an injection moulding or pressure die-casting.

6. A roof element according to one of the preceding Claims, characterised in that the extruded section (12, 42, 82, 94) is disposed crosswise to the direction of travel.

7. A roof element according to one of the preceding Claims, characterised in that the roof element (90, 92, 118) is of segmental construction and, in a sequence of other segmental roof elements (92, 90, 118), forms a segmental sliding roof.

8. A roof element according to Claim 7, characterised in that it has at a first abutting edge (102) an undercut (104) to accommodate a gasket (106) and has on the second abutting edge (110) which is remote therefrom a bearing surface (112) adapted to bear in sealing-tight manner against the gasket (106) of an adjacent roof element (92).

9. A roof element according to Claim 7 or 8, characterised in that on its side facing the interior of the vehicle there are connecting elements (116), preferably grooves, to accommodate a vehicle headlining (114) which extends over a roof element (90, 92) or over the entire segmental roof.

10. A roof element according to Claim 9, characterised in that the connecting elements (116) are spaced apart from an abutting edge (110) of the roof element (90, 92).

11. A roof element according to one of Claims 7 to 10, characterised in that on its side remote from the interior of the vehicle it has at least one groove (98) for fixing a sliding roof cladding (100) in the form of a layer of film or fabric.

12. A roof element according to Claim 11, characterised in that the groove (98) is spaced apart from at least one abutting edge (102).

13. A roof element according to one of the preceding Claims, characterised by an integrally formed gutter (120).

## Revendications

1. Elément de couvercle (10, 30, 40, 62, 80, 90, 92, 118) pour fermer à volonté ou dégager au moins partiellement une ouverture de toit dans un toit de véhicule automobile, caractérisé en ce que l'élément de couvercle (10, 30, 40, 62, 80, 90, 92, 118) est essentiellement constitué par un profilé filé (12, 42, 82, 94) en un métal léger ou bien l'alliage de métaux légers.

2. Elément de couvercle selon la revendication 1 caractérisé en ce que les arêtes de coupe (46, 84) du profilé filé (42, 82) sont recouvertes par une pièce terminale (44, 64, 86) réalisée sous la forme d'un élément d'étanchement et/ou de guidage.

3. Elément de couvercle selon la revendication 2 caractérisé en ce que la pièce terminale (44, 86) comporte un profilé complémentaire (50, 88) par rapport au profilé filé (42, 82).

4. Elément de couvercle selon la revendication 2 ou la revendication 3 caractérisé en ce que la pièce terminale (44, 64, 86) et le profité filé (42, 82) sont reliés ensemble par sertissage, collage, vissage ou rivetage.

5. Elément de couvercle selon une des revendications 2 à 4 caractérisé en ce que la pièce terminale (44, 64, 86) est réalisée sous la forme d'une pièce de forme moulée par injection ou moulée sous pression.

6. Elément de couvercle selon une des précédentes revendications caractérisé en ce que le profilé filé (12, 42, 82, 94) est disposé transversalement par rapport à la direction de déplacement du véhicule.

7. Elément de couvercle selon une des précédentes revendications caractérisé en ce que l'élément de couvercle (90, 92, 118) est réalisé sous forme de lamelles et forme en une succession avec d'autres éléments de couvercle (92, 90, 118) sous forme de lamelles un toit coulissant en lamelles.

8. Elément de couvercle selon la revendication 7 caractérisé en ce que sur un premier bord (102) d'arrêt il comporte une contre-dépouille (104) pour recevoir une garniture d'étanchéité (106) et sur le deuxième bord (110) d'arrêt opposé à celui-ci une surface d'appui (112) pour permettre un appui étanche à la garniture d'étanchéité (106) d'un élément de couvercle (92) voisin.

9. Elément de couvercle selon la revendication 7 ou la revendication 8 caractérisé en ce que sur sa face tournée vers l'intérieur du véhicule sont disposés des éléments d'assemblage (116), de préférence des rainures, pour recevoir un habillage de plafond (114) de véhicule, qui s'étend sur un élément de couvercle (90, 92) ou bien sur la totalité du toit en lamelles.

10. Elément de couvercle selon la revendication 9 caractérisé en ce que les éléments d'assemblage (116) se trouvent à une certaine distance d'un bord (110) d'arrêt de l'élément de couvercle (90, 92).

11. Elément de couvercle selon une des revendications 7 à 10 caractérisé en ce que sur sa face externe opposée à l'intérieur du véhicule, il est prévu au moins une rainure (98) pour la fixation d'un revêtement de toit ouvrant (100) sous la forme d'une garniture en feuille ou en tissu.

12. Elément de couvercle selon la revendication 11 caractérisé en ce que la rainure (98) est à une certaine distance d'au moins un bord (102).

13. Elément de couvercle selon une des précédentes revendications caractérisé par une gouttière (120) mise en forme.
